(19) Europäisches Patentamt
European Patent Office
Office européen des brevets

(11) **EP 4 343 416 A1**

(12) **EUROPEAN PATENT APPLICATION**
published in accordance with Art. 153(4) EPC

(43) Date of publication:
**27.03.2024 Bulletin 2024/13**

(21) Application number: **22804679.3**

(22) Date of filing: **17.05.2022**

(51) International Patent Classification (IPC):
*G02F 1/153* (2006.01)   *G02C 7/00* (2006.01)
*G02C 7/10* (2006.01)   *G02F 1/15* (2019.01)

(52) Cooperative Patent Classification (CPC):
**G02C 7/00; G02C 7/10; G02F 1/15; G02F 1/153**

(86) International application number:
**PCT/JP2022/020520**

(87) International publication number:
**WO 2022/244768 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2021 JP 2021082860**

(71) Applicant: **Hoya Lens Thailand Ltd.**
**Pathumthani 12130 (TH)**

(72) Inventors:
• **KAWAKAMI, Hironori**
  **Tokyo 160-8347 (JP)**
• **MIYAZAKI, Shigeki**
  **Tokyo 160-8347 (JP)**

(74) Representative: **Hoffmann Eitle**
**Patent- und Rechtsanwälte PartmbB**
**Arabellastraße 30**
**81925 München (DE)**

(54) **ELECTROCHROMIC ELEMENT AND SPECTACLE LENS**

(57)  To provide an electrochromic element in which a decrease in responsiveness is minimized by making a laminated structure have gas barrier properties, and a lens for spectacles.

An electrochromic element (10) of the present invention is an electrochromic element in which a support (1) and an electrochromic film (2) having an electrode layer (5, 6) and an electrochromic layer (7) are laminated, wherein a barrier layer (11) is laminated in the laminated structure constituting the electrochromic element. The barrier layer preferably has gas barrier properties and transparency.

FIG.1

EP 4 343 416 A1

**Description**

[Technical Field]

The present invention relates to an electrochromic element whose color development and discoloration can be reversibly controlled by electricity and a lens for spectacles.

[Background Art]

Electrochromic elements that utilize an electrochromism phenomenon in which a voltage is applied to cause a reversible oxidation-reduction reaction and colors are reversibly changed are used as, for example, lenses for spectacles. PTL 1 discloses an electrochromic element in which a pair of substrates and an electrode layer and an electrochromic layer arranged between the substrates are laminated.

[Citation List]

[Patent Literature]

[PTL 1] Japanese Patent Application Publication No. 2017-111389

[Summary of Invention]

[Technical Problem]

Incidentally, electrochromic elements are elements that utilize an electrochromism phenomenon in which a voltage is applied to both electrodes to cause a reversible oxidation-reduction reaction and colors are reversibly changed.
However, there is a problem in that the responsiveness decreases due to water or oxygen entering from the front surface or back surface of the electrochromic element.
The present invention has been made in order to address the above problems, and an objective of the present invention is to provide an electrochromic element in which a decrease in responsiveness is minimized by making a laminated structure have gas barrier properties, and a lens for spectacles.

[Solution to Problem]

An electrochromic element in the present invention is an electrochromic element in which a support and an electrochromic film having an electrode layer and an electrochromic layer are laminated, wherein a barrier layer is laminated in the laminated structure constituting the electrochromic element.
In the present invention, preferably, the barrier layer has gas barrier properties and transparency.
In the present invention, a functional layer may be formed on the surface of the electrochromic film, and the barrier layer may be arranged between the electrochromic film and the functional layer.
In the present invention, the functional layer may include at least one of a hard coat layer, an antireflection layer, an antistatic layer, a water repellent layer, and an antifogging layer.
In the present invention, the barrier layer may be arranged between the support and the electrochromic film.
In the present invention, the electrochromic film may include a pair of substrates, the electrode layer laminated between the substrates, and the electrochromic layer, and the barrier layer may be arranged between at least one of the substrates and the electrochromic layer.
A lens for spectacles in the present invention is the electrochromic element described above, wherein the support is a lens substrate.

[Advantageous Effects of Invention]

According to the electrochromic element of the present invention, the laminated structure has a barrier layer, and accordingly, it is possible to improve gas barrier properties and it is possible to obtain excellent responsiveness.

[Brief Description of Drawings]

[Fig. 1]

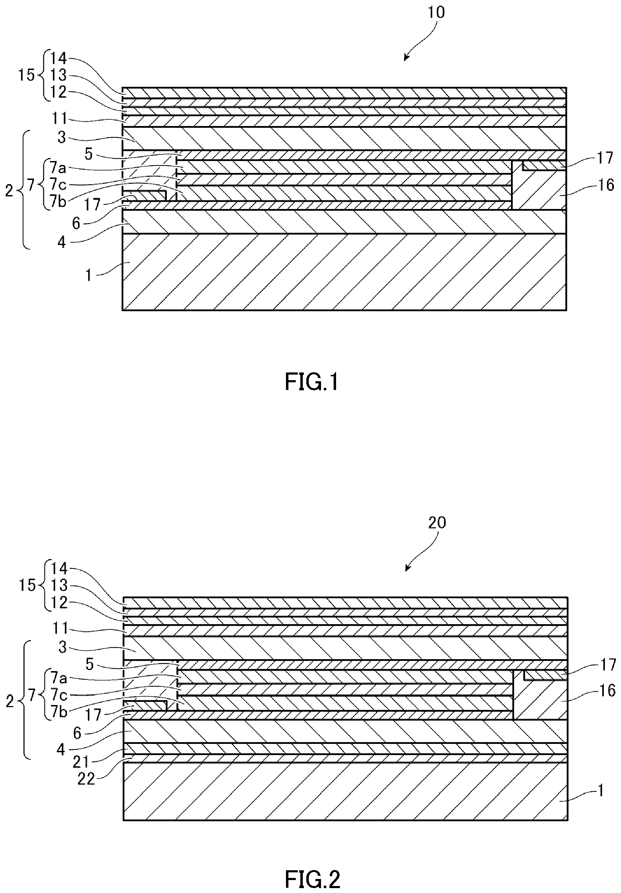

Fig. 1 is a schematic cross-sectional view of an electrochromic element according to a first embodiment of the present invention.
[Fig. 2]
Fig. 2 is a schematic cross-sectional view of an electrochromic element according to a second embodiment of the present invention.
[Fig. 3]

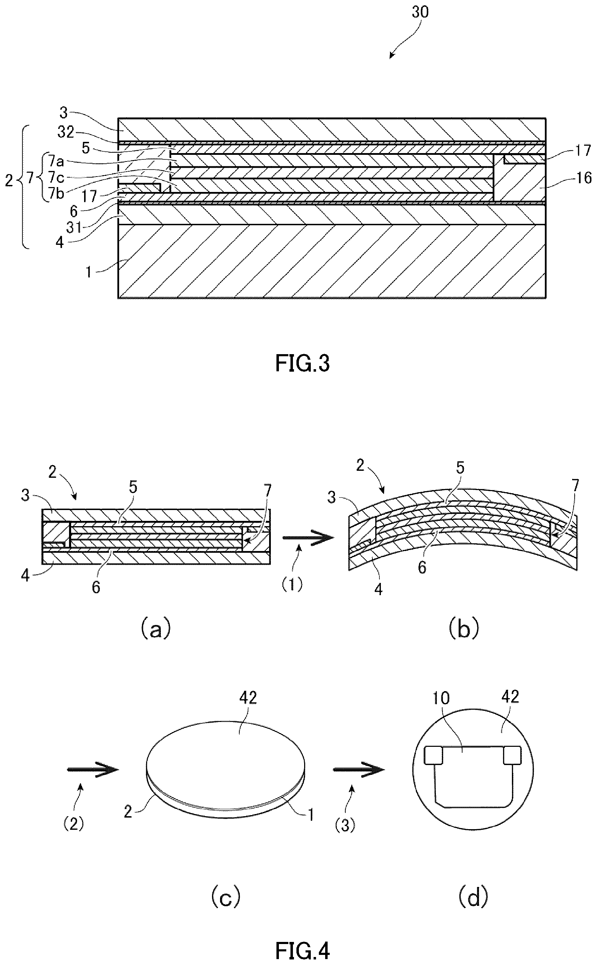

Fig. 3 is a schematic cross-sectional view of an electrochromic element according to a third embodiment of the present invention.
[Fig. 4]
Fig. 4 is an illustrative diagram showing a process of producing an electrochromic element according to an embodiment of the present invention.

[Description of Embodiments]

Hereinafter, a mode for implementing the present invention (hereinafter simply referred to as "the present embodiment") will be described in detail.

<Problems in Conventional Electrochromic Element and Overview of Present Embodiment>

Electrochromic elements are elements that utilize an electrochromism phenomenon in which a voltage is applied to both electrodes to cause a reversible oxidation-reduction reaction and colors are reversibly changed. For example, electrochromic elements can be used as lenses for spectacles, and can function as sunglasses in bright places and clear lenses in dark places. It is possible to adjust the brightness to an optimal level by operating a switch or automatically.
An electrochromic element has a laminated structure in which an electrochromic film having an electrode layer and an electrochromic layer is laminated on the surface of a support.
Incidentally, when water or oxygen penetrates into the electrochromic layer through the laminated structure from the front surface or back surface of the electrochromic element, there is a problem that the responsiveness of color change due to an electrochromism phenomenon decreases such as a decrease in the reversibility of the oxidation-reduction reaction.
Therefore, the inventors conducted extensive studies and as a result, found that, when a barrier layer is arranged in the laminated structure constituting the electrochromic element, penetration of water or oxygen into the laminate is inhibited, and the responsiveness is improved. Hereinafter, the layer structure of the electrochromic element in the present embodiment will be described in detail.

<Electrochromic Element 10 in First Embodiment>

Fig. 1 is a schematic cross-sectional view of an electrochromic element 10 according to a first embodiment of the present invention.
The electrochromic element 10 includes a support 1 and an electrochromic film 2 laminated on the surface of the support 1.

[Support 1]

The support 1 is required to be transparent and have high transmittance. The material of the support 1 is not limited, and examples thereof include resin substrates that can be molded in a mold such as a polycarbonate resin, an acrylic resin, an epoxy resin, and a phenolic resin, and glass substrates. Among these, the support 1 is preferably formed of a polycarbonate resin in consideration of moldability and production cost.

[Electrochromic Film 2]

The electrochromic film 2 includes a pair of a first substrate 3 and a second substrate 4, a pair of a first electrode layer 5 and a second electrode layer 6 provided on the inner surfaces of the first substrate 3 and the second substrate 4, and an electrochromic layer 7 provided between the first electrode layer 5 and the second electrode layer 6. The electrochromic layer 7 includes a reduction layer 7a arranged on the side of the first electrode layer 5, an oxidation layer 7b arranged on the side of the second electrode layer 6, and an electrolyte layer 7c provided between the reduction layer 7a and the oxidation layer 7b. In this manner, in the electrochromic film 2, the second substrate 4/the second electrode layer 6/the oxidation layer 7b/the electrolyte layer 7c/the reduction layer 7a/the first electrode layer 5/the first substrate 3 are laminated in order from the bottom of Fig. 1.

The substrates 3 and 4 constituting the electrochromic film 2 are in the form of a film or sheet, and can be formed of the same resin material as the support 1. Like the support 1, the substrates 3 and 4 are also required to be transparent and have high transmittance. Like the support 1, the substrates 3 and 4 are preferably formed of a polycarbonate resin.

Properties required for the electrode layers 5 and 6 constituting the electrochromic film 2 include transparency, high transmittance, and excellent conductivity. In order to satisfy such properties, the electrode layers 5 and 6 are transparent electrode layers, and an indium tin oxide (ITO) is particularly preferably used.

For the reduction layer 7a, the oxidation layer 7b and the electrolyte layer 7c constituting the electrochromic layer 7, existing materials can be used.

The reduction layer 7a is a layer that develops colors according to a reduction reaction. For the reduction layer 7a, existing reduced electrochromic compounds can be used. It does not matter whether it is an organic substance or an inorganic substance, and although not limited, examples include azobenzene, anthraquinone, diarylethene, dihydroprene, dipyridine, styryl, styryl spiropyran, spirooxazine, spirothiopyran, thioindigo, tetrathiafulvalene, terephthalic acid, triphenylmethane, triphenylamine, naphthopyran, viologen, pyrazoline, phenazine, phenylenediamine, phenoxazine, phenothiazine, phthalocyanine, fluoran, fulgide, benzopyran, and metallocene substances, tungsten oxide, molybdenum oxide, iridium oxide, and titanium oxide.

The oxidation layer 7b is a layer that develops colors according to an oxidation reaction. For the oxidation layer 7b, existing oxidized electrochromic compounds can be used. It does not matter whether it is an organic substance or an inorganic substance, and although not limited, for example, it can be selected from among a composition containing a radically polymerizable compound including triarylamine, a Prussian blue type complex, nickel oxide, iridium oxide and the like.

The electrolyte layer 7c has electronic insulation and ionic conductivity and is preferably transparent. The electrolyte layer 7c may be a solid electrolyte, a gel, or a liquid. In order to maintain high ionic conductivity, a gel is preferable. Although not limited, for example, existing electrolyte materials such as inorganic ion salts such as alkali metal salts and alkaline earth metal salts, quaternary ammonium salts and acids can be used.

[Functional Layer 15]

As shown in Fig. 1, on the surface of the electrochromic film 2, for example, a functional layer 15 including a hard coat layer 12, an antireflection layer 13 and a water repellent layer 14 is provided.

The hard coat layer 12 can impart scratch resistance to the electrochromic element 10. The hard coat layer 12 is formed of a curable composition, and as the curable composition, for example, a photocurable silicone composition, an acrylic ultraviolet curable monomer composition, a thermosetting composition containing inorganic fine particles such as $SiO_2$ and $TiO_2$ can be preferably used.

The antireflection layer 13 generally has a multi-layer structure in which layers having different refractive indexes are laminated and is a film that prevents reflection of light by interference. The antireflection layer 13 has a structure in which low-refractive-index layers and high-refractive-index layers are alternately laminated. Although not limited, it is preferable to use $SiO_2$ for the low-refractive-index layer. In addition, for the high-refractive-index layer, $ZrO_2$, $Y_2O_3$, $Al_2O_3$ and the like can be used.

For the water repellent layer 14, for example, a fluorine-based substance can be preferably used. The water repellent layer 14 preferably has not only water-repellent properties but also antibacterial properties.

Here, the functional layer 15 may include at least one of the hard coat layer 12, the antireflection layer 13, an antistatic layer, the water repellent layer 14, and an antifogging layer.

[Seal Layer 16]

As shown in Fig. 1, a sealing layer 16 is provided between the first substrate 3 and the second substrate 4 and around the electrochromic layer 7. As shown in Fig. 1, parts of the first electrode layer 5 and the second electrode layer 6 extend to the position of the sealing layer 16, and metal terminal parts 17 are formed on the electrode layers 5 and 6 in an overlapping manner. The metal terminal part 17 is exposed to the outside, and a voltage can be applied between the pair of electrode layers 5 and 6 through the metal terminal part 17.

[Barrier Layer 11]

A barrier layer 11 will be described. In the first embodiment shown in Fig. 1, the barrier layer 11 is arranged between the electrochromic film 2 and the functional layer 15.

It is preferable that the barrier layer 11 have gas barrier properties and transparency. Gas barrier properties can be evaluated by the water vapor transmission rate (WVTR) and the $O_2$ transmittance. Gas barrier properties can be measured using a dry/wet sensor (Lyssy) method, a Mocon (MOCON) method, a gas chromatography method, an API-MS method, a Ca corrosion method, and a differential pressure method. For example, the water vapor transmission rate and the $O_2$ transmittance are measured according to "Mocon method (JIS K 7129 (B))." In the present embodiment, the water vapor transmission rate (WVTR) under an atmosphere of a temperature of 40°C and a humidity of 90% RH is 30 ($g/m^2 \cdot day$) or less, preferably 25 ($g/m^2 \cdot day$) or less, more preferably 10 ($g/m^2 \cdot day$) or less, still more preferably 3 ($g/m^2 \cdot day$) or less, yet more preferably 1 ($g/m^2 \cdot day$) or less, yet more preferably 0.1 ($g/m^2 \cdot day$) or less, yet more preferably 0.01 ($g/m^2 \cdot day$) or less, yet more preferably 0.001 ($g/m^2 \cdot day$) or less, yet more preferably $10^{-4}$($g/m^2 \cdot day$) or less, and most preferably $10^{-5}$ ($g/m^2 \cdot day$) or less. In addition, the lower limit value of the water vapor transmission rate is not limited, and for example, the lower limit value can be set to about $10^{-6}$ ($g/m^2 \cdot day$) The $O_2$ transmittance under an atmosphere of a temperature of 20°C and a humidity of 65% RH is preferably 20 ($cc/m^2 \cdot day \cdot atm$) or less, more preferably 15 ($cc/m^2 \cdot day \cdot atm$) or less, still more preferably 10 ($cc/m^2 \cdot day \cdot atm$) or less, yet more preferably 5 ($cc/m^2 \cdot day \cdot atm$) or less, yet more preferably 1 ($cc/m^2 \cdot day \cdot atm$) or less, yet more preferably 0.08 ($cc/m^2 \cdot day \cdot atm$) or less, and most preferably 0.06 ($cc/m^2 \cdot day \cdot atm$) or less.

In the present embodiment, it is necessary to satisfy at least the water vapor transmission rate between the water vapor transmission rate and the $O_2$ transmittance of the barrier layer 11, and it is preferable to satisfy both.

The barrier layer 11 is formed of a single inorganic film layer or an inorganic film laminate, a single organic film layer or an organic film laminate, or a laminate of an inorganic film and an organic film. Although the material is not limited, as the inorganic film, one or more can be selected from among SiO, $SiO_2$, $Al_2O_3$, $CaF_2$, $SnO_2$, $CeF_3$, MgO, $MgAl_2O_4$, SiNx, SiCN, SiC, SiOC, and SiOAI. Among these, when $SiO_2$, $Al_2O_3$ and $MgAl_2O_4$ are selected, it is possible to effectively improve gas barrier properties. In addition, as the organic film, one or more can be selected from among polyethylene terephthalate (PET), polyethylene naphthalate (PEN), polyethersulfone (PES), polychlorotrifluoroethylene (PCTFE) and the like.

For example, regarding the configuration of the barrier layer 11, when the barrier layer 11 includes an inorganic film, a base material for forming the inorganic film is required, that is, the base material/the barrier layer 11 constitutes a barrier film. This base material can be the first substrate 3 in Fig. 1 and accordingly the first substrate 3/the barrier layer 11 can constitute a barrier film. In such a barrier film, the above values of the water vapor transmission rate and the $O_2$ transmittance may be satisfied not only for the barrier layer 11 alone but also for the barrier film. For example, the first substrate 3 as a base material is a polycarbonate film having a thickness of 100 um.

When an inorganic film is provided on the barrier layer 11, excellent gas barrier properties can be obtained even if the barrier layer 11 is thin. In addition, when an organic film is provided on the barrier layer 11, handling of the barrier layer 11 can be facilitated. Therefore, when the barrier layer 11 has a laminated structure of an organic film and an inorganic film, both the above effects can be obtained. In addition, if a laminated structure of an organic film and an inorganic film is formed, for example, when the electrochromic film 2 is bent into a curved shape, even if a defect occurs in the inorganic film, a defect is unlikely to occur in the organic film, and it is possible to maintain gas barrier properties.

Although the thickness of the barrier layer 11 is not limited, it is, for example, about 10 nm to 200 $\mu$m, preferably about 15 nm to 150 $\mu$m, and more preferably about 20 nm to 100 um. Specifically, the thickness of the inorganic film constituting the barrier layer 11 is preferably about 10 nm to 200 nm, more preferably about 15 nm to 150 nm, and still more preferably about 20 nm to 100 nm. As an example of the inorganic film, a $SiO_2$ film may be exemplified. In the barrier layer 11 (barrier film) in which an inorganic film is formed on the surface of the base material of the organic film, the base material has a thickness of about several tens of um to several hundreds of um, and the inorganic film can be made as thin as nm units as described above. In the present embodiment, for example, the thickness of the barrier film in which an inorganic film is formed on the surface of the PET base material or an inorganic film and an organic film are laminated on the surface of the PET base material is adjusted. In the present embodiment, even if the thickness of the barrier layer 11 is reduced to several tens of $\mu$m, it is possible to obtain the water vapor transmission rate and $O_2$ transmittance in the above numerical value ranges.

The barrier layer 11 has gas barrier properties and transparency. "Transparency" means a state of being transparent in a visible range and can be defined by the absorbance in the visible range. For example, the absorbance in the visible range measured using an UV-VIS-NIR spectrophotometer UH4150 (commercially available from Hitachi High-Tech Science Corporation) at a wavelength of 400 to 750 mm is preferably 0.1 Abs or less and more preferably 0.09 Abs or less.

In addition, the "transparency" of the barrier layer 11 means that light is not scattered and can be defined by the haze. Generally, the haze can be determined by measuring the total light transmittance and the diffuse transmittance of the barrier layer 11 using an integrating sphere light transmittance measurement device and according to the following formula.

$$\text{haze value (\%)=diffuse transmittance (\%)/total light}$$

$$\text{transmittance (\%)×100}$$

Here, the diffuse transmittance is a value obtained by subtracting the parallel light transmittance from the total light transmittance.

In the present embodiment, the haze value is 30% or less, preferably 20% or less, more preferably 10% or less, and still more preferably 1% or less.

The transparency of the barrier layer 11 preferably satisfies both the visible absorbance and the haze. Here, for the barrier film of the resin film/inorganic film, the transparency is defined by the absorbance in the visible range and the haze value of the barrier film.

In addition, when the refractive index difference between the barrier layer 11 and an adjacent layer next to it is reduced, this is preferable because the interference fringe can be reduced. For example, in Fig. 1, since the barrier layer 11 is arranged between the first substrate 3 and the hard coat layer 12, the refractive index of the barrier layer 11 is preferably a value between the refractive index of the first substrate 3 and the refractive index of the hard coat layer 12. Therefore, the refractive index difference between the barrier layer 11 and the adjacent layer can be reduced. Specifically, the refractive index difference between the barrier layer 11 and the adjacent layer is adjusted to 0.4 or less, the refractive index difference is preferably adjusted to 0.2 or less, and the refractive index difference is more preferably adjusted to 0.1 or less.

Here, when the barrier layer 11 also serves as the antireflection layer 13, it is preferable to perform an optical design so that the optical design makes reflected light weaker than incident light.

In addition, the barrier layer 11 preferably has flexibility. As will be described below, in the mode in which the electrochromic film 2 according to the present embodiment is bent into a curved shape, when the barrier layer 11 has flexibility, the barrier layer 11 can be appropriately deformed to conform to the shape of the electrochromic film 2. As described above, when the barrier layer 11 is formed as a barrier film having a laminated structure of an inorganic film and an organic film, even if a defect occurs in the inorganic film when the barrier layer 11 is deformed, it is possible to prevent a defect from occurring in the organic film as well, and it is possible to maintain gas barrier properties appropriately. The flexibility is evaluated by bending both sides of the barrier layer 11 close together and measuring a bending angle at which a defect occurs in the barrier layer 11. The bending angle is defined by the bending angle of respective ends from the flat position (0 degrees). The bending angle of each end is preferably 15 degrees or more, more preferably 30 degrees or more, and still more preferably 45 degrees or more. For example, when applied to lenses for spectacles, the flexibility can be evaluated by the radius of curvature, and specifically, the radius of curvature is preferably 150 mm or less, more preferably 100 mm or less, still more preferably 90 mm or less, and yet more preferably 60 mm or less.

In the first embodiment shown in Fig. 1, the barrier layer 11 is interposed between the electrochromic film 2 and the functional layer 15. Therefore, it is possible to improve the gas barrier properties while operational effects (an antireflection effect and a water repellent effect) of the functional layer 15 are maintained, it is possible to effectively prevent water or oxygen from entering the electrochromic layer 7 and it is possible to obtain good responsiveness.

In Fig. 1, the barrier layer 11 is provided separately from the functional layer 15, but the barrier layer 11 itself may have the functions of the hard coat layer 12 and the antireflection layer 13. Therefore, there is no need to form the hard coat layer 12 and the antireflection layer 13 in addition to the barrier layer 11, and it is possible to simplify the laminated structure of the electrochromic element 10.

<Electrochromic Element 20 in Second Embodiment>

Fig. 2 is a schematic cross-sectional view of an electrochromic element 20 according to a second embodiment of the present invention.

The electrochromic element 20 according to the second embodiment shown in Fig. 2 has the same configuration as the electrochromic element 10 according to the first embodiment shown in Fig. 1 except that a barrier layer 21 is additionally arranged between the support 1 and the electrochromic film 2.

For example, the support 1 is preferably a resin substrate such as a polycarbonate resin in consideration of moldability and production cost, but has a higher water absorption rate than a glass substrate. Therefore, in the second embodiment, when the barrier layer 21 is arranged also on the side of the support 1, it is possible to prevent water or oxygen from entering from the side of the support 1.

In Fig. 2, the support 1 and the barrier layer 21 are bonded with an adhesive layer 22 therebetween, but if the support 1 and the barrier layer 21 can be directly bonded, the adhesive layer 22 is not required.

In the electrochromic element 20 according to the second embodiment shown in Fig. 2, the two barrier layers 11 and 21 are provided on both sides of the electrochromic layer 7, and when viewed from the electrochromic layer 7, it is possible to effectively prevent water and oxygen from entering from both the side of the functional layer 15 and the side of the support 1. Therefore, it is possible to improve gas barrier properties more effectively and it is possible to obtain better responsiveness.

Here, also in the second embodiment shown in Fig. 2, the barrier layer 21 can be formed to constitute a barrier film on the surface of the second substrate 4.

<Electrochromic Element 30 in Third Embodiment>

Fig. 3 is a schematic cross-sectional view of an electrochromic element 30 according to a third embodiment of the present invention.

In Fig. 3, barrier layers 31 and 32 are arranged between the first electrode layer 5 positioned on the inner surface of the first substrate 3 constituting the electrochromic film 2 and the first substrate 3, and between the second electrode layer 6 positioned on the inner surface of the second substrate 4 and the second substrate 4, respectively.

The first substrate 3 and the second substrate 4 are, for example, resin films such as polycarbonate, and in order to improve gas barrier properties, it is preferable to provide the barrier layers 31 and 32 on the inside of the substrates 3 and 4. For example, the barrier layers 31 and 32 are inorganic films such as $SiO_2$, and can constitute a barrier film in which the barrier layers 31 and 32 are formed on the inner surfaces of the first substrate 3 and the second substrate 4. Therefore, the barrier film has excellent handling properties, it is possible to prevent water and oxygen from entering the electrochromic layer 7, and it is possible to effectively improve gas barrier properties, and it is possible to obtain good responsiveness.

Here, since a laminate of the first electrode layer 5/the electrochromic layer 7/the second electrode layer 6 is preferably a continuous structure, the barrier layer is preferably provided on the outside of the laminated structure as shown in Fig. 3.

<Other Embodiments>

In the present embodiment, the barrier layer may be arranged anywhere in the laminated structure constituting the electrochromic element, the arrangement of barrier layers is not limited to those shown in Fig. 1 to Fig. 3, and the number of barrier layers arranged is not limited. The barrier layer may be arranged inside the laminated structure or arranged on the surface (outer surface) of the laminated structure, but it may be arranged at a position at which an electrochromic phenomenon or other provided functions are not impaired, and in consideration of a producing process, it is preferable to arrange the barrier layer at an appropriate position. For this reason, as described above, it is preferable that the electrochromic layer 7 and each of the electrode layers 5 and 6 be in direct contact with each other, and therefore, the barrier layer is preferably arranged at least on the outside of the electrode layers 5 and 6.

In addition, it is more preferable that the barrier layer be arranged in the laminated structure constituting the electrochromic element and the sealing layer 16 have gas barrier properties.

For example, the sealing layer 16 is preferably formed of a material that can be patterned and has gas barrier properties. For example, at least one of a UV curing resin, a thermosetting resin, a low-melting-point alloy, and a low-melting-point glass can be selected. A UV curing resin is preferable because it can be cured without requiring a high-temperature heat treatment.

<Applications>

Although applications of the electrochromic element of the present embodiment are not limited, it can be preferably applied to a light control lens for spectacles. In the lens for spectacles, the support 1 is a lens substrate.

The electrochromic element of the present embodiment may be applied to those other than the lens for spectacles. Examples thereof include electrochromic light control devices and anti-glare mirrors.

<Method of Producing Electrochromic Element in Present Embodiment>

Fig. 4 is an illustrative diagram showing a method of producing an electrochromic element in the present embodiment.

In Fig. 4(a), the electrochromic film 2 having the pair of substrates 3 and 4, the electrode layers 5 and 6 arranged inside the substrates 3 and 4, and the electrochromic layer 7 interposed between the electrode layers 5 and 6 is prepared. Here, the laminated structure of the electrochromic film 2 is not limited and a laminated structure other than that shown in Fig. 4(a) may be used.

Next, the electrochromic film 2 is set in a mold (not shown), the material constituting the support 1 is injected into the mold to mold the support 1, and as shown in Fig. 4(b), the electrochromic film 2 may be preformed into a curved shape. That is, when the electrochromic element of the present embodiment is applied to a lens for spectacles, since the lens for spectacles has a three-dimensional curved surface, it is preferable to preform the electrochromic film 2 into a three-dimensional curved surface before the support 1 is molded. For example, the electrochromic film 2 is set in a mold while heating and processed into a spherical shape while pressing.

Then, between Fig. 4(a) and Fig. 4(b), a barrier layer forming process (1) can be provided. That is, a barrier layer can be provided on the surface (outer surface) of the flat electrochromic film 2 shown in Fig. 4(a). For example, the barrier layer 11 can be formed on the surface of the first substrate 3 of the electrochromic film 2 (refer to Fig. 1), or the barrier layers 11 and 21 can be formed on the surfaces of the substrates 3 and 4 (refer to Fig. 2). Alternatively, the barrier layer 21 may be formed only on the surface of the second substrate 4. The barrier layers 11 and 21 can be formed by a dry film forming method such as a CVD method, a sputtering method, and a vapor deposition method or a wet film forming method such as a coating method and a printing method. In addition, the barrier layers 11 and 21 can be directly formed on the surfaces of the substrates 3 and 4 to constitute a barrier film, alternatively, barrier films are separately prepared and the barrier films are attached to the substrates 3 and 4 with an adhesive layer therebetween, or they can be directly attached to the surface of the substrates 3 and 4 by thermocompression bonding or the like with no interposing adhesive layer.

Next, in Fig. 4(c), the support 1 is molded to obtain an electrochromic element intermediate 42 in which the electrochromic film 2 is formed on the surface of the support 1.

In the present embodiment, between Fig. 4(b) and Fig. 4(c), a barrier layer forming process (2) can be provided.

In the barrier layer forming process (1), since the electrochromic film 2 is then preformed into a curved shape, it is necessary for the barrier layers 11 and 21 provided on the surface of the electrochromic film 2 to have flexibility. On the other hand, in the barrier layer forming process (2), the electrochromic film 2 is preformed into a curved shape and the barrier layers 11 and 21 can then be formed along the curved surface by a dry film forming method or a wet film forming method.

After the process in Fig. 4(c), the functional layer 15 including the hard coat layer 12, the antireflection layer 13 and the water repellent layer 14 is formed on the surface of the electrochromic film 2. In this case, in the barrier layer forming process (3), the hard coat layer 12 and the antireflection layer 13 can be formed of a material having gas barrier properties.

Then, in Fig. 4(d), the electrochromic element intermediate 42 is cut into a predetermined shape to obtain the electrochromic element 10.

In addition, the barrier layer forming processes (1) to (3) shown in Fig. 4 may be performed at least once or a plurality of times. Alternatively, a barrier layer can be formed at a timing different from the barrier layer forming processes (1) to (3).

In addition, in order to form the electrochromic element 30 shown in Fig. 3, before the electrochromic film 2 in Fig. 4(a) is formed, it is necessary to arrange the barrier layers 31 and 32.

In the present embodiment, in the process of producing an electrochromic element, the barrier layer forming processes (1) to (3) can be provided, and it is possible to produce an electrochromic element having excellent gas barrier properties without complicating the producing process.

[Examples]

Hereinafter, the present embodiment will be described in more detail with reference to examples and comparative examples.

<Experiment for Water Vapor Transmission Rate, $O_2$ Transmittance, Absorbance in Visible Range and Haze>

In the experiment, a barrier film including a base material/barrier layer was used. A polycarbonate film having a thickness of 100 um was used as the base material, and a $SiO_2$ film as a barrier layer was formed on the surface of the polycarbonate film by a chemical vapor deposition (CVD) method.

The water vapor transmission rate, the $O_2$ transmittance, the absorbance in the visible range, and the haze were determined in experimental examples in which the thickness of the $SiO_2$ film was changed to 0 nm, 5 nm, 20 nm, 50 nm, 100 nm, and 2,100 nm.

The water vapor transmission rate and the $O_2$ transmittance were measured by the Mocon method (JIS K 7129 (B)). The water vapor transmission rate (WVTR) was measured under an atmosphere of a temperature of 40°C and a humidity of 90% RH. The $O_2$ transmittance was measured under an atmosphere of a temperature of 20°C and a humidity of 65% RH.

The absorbance in the visible range was measured using a UV-VIS-NIR spectrophotometer UH4150 (commercially available from Hitachi High-Tech Science Corporation) at a wavelength of 400 to 750 mm.

The haze was determined by measuring the total light transmittance and the diffuse transmittance of the barrier film using an integrating sphere light transmittance measurement device and according to haze value (%)=diffuse transmittance (%)/total light transmittance (%)×100. The experiment results are shown in the following Table 1.

[Table 1]

| Experimental Example | 1 | 2 | 3 | 4 | 5 | 6 |
|---|---|---|---|---|---|---|
| SiO$_2$ Film thickness (nm) | 20 | 50 | 100 | 0 | 5 | 2100 |
| WVTR (g/m$^2$·day) | $2\times10^{-4}$ | $3\times10^{-6}$ | $5\times10^{-6}$ | 48 | 35 | 39 |
| O$_2$ transmittance (cc/m$^2$·day·atm) | 8 | $6\times10^{-2}$ | $3\times10^{-3}$ | 28 | 25 | 65 |
| Absorbance in the visible range (Abs) | 0.086 | 0.086 | 0.081 | 0.046 | 0.056 | 0.187 |
| Haze (%) | 0.6 | 0.7 | 0.6 | 0.4 | 0.6 | 44 |

<Visual Examination>

In addition, the electrochromic element 10 shown in Fig. 1 was prepared using the barrier films of Experimental Example 1 to Experimental Example 6, and as an acceleration test, each experiment sample was left in a constant temperature and humidity chamber at a temperature of 40°C and a humidity of 90% for 240 hours, and a visual examination was then performed after 10 electrical current tests (coloring and fading were repeated).

In Experimental Example 1 to Experimental Example 3, it can be understood that the state of the electrochromic element was the same before and after the constant temperature and humidity test, no deterioration during coloring was observed, and a favorable state was maintained.

On the other hand, in Experimental Example 4, it can be understood that, in a visual examination after the electrochromic lens was left in a constant temperature and humidity machine, the electrochromic lens turned yellow. In addition, when the electrochromic lens was colored, the density became thinner, and furthermore, the cloudiness was observed.

In addition, in Experimental Example 5, it can be understood that, in a visual examination after the electrochromic lens was left in a constant temperature and humidity machine, the electrochromic lens turned yellow. In addition, when the electrochromic lens was colored, the density became thinner.

In Experimental Example 4 and Experimental Example 5, it was thought that, when water entered the inside of the electrochromic lens, the state of the electrochromic element deteriorated after the constant temperature and humidity test.

In Experimental Example 6, it was confirmed that fine cracks occurred in the SiO$_2$ film after the SiO$_2$ film was formed. The electrochromic element was disassembled and the haze of the electrochromic element was measured as 30%. It can be understood that, in Experimental Example 6, the barrier layer was cracked and the haze and the O$_2$ transmittance significantly deteriorated. Cracks in the barrier layer were thought to be caused by the SiO$_2$ film being too thick and cracking due to stress in the film.

Based on the experiment results, Experimental Example 1 to Experimental Example 3 were taken as examples, and Experimental Example 4 to Experimental Example 6 were taken as comparative examples.

[Industrial Applicability]

Since the electrochromic element of the present invention has excellent gas barrier properties, when the electrochromic element is used as, for example, a lens for light control spectacles, it is possible to obtain a feeling of use with excellent responsiveness.

Priority is claimed on Japanese Patent Application No. 2021-082860, filed May 17, 2021, the content of which is incorporated herein by reference.

**Claims**

1.   An electrochromic element in which a support and an electrochromic film having an electrode layer and an electrochromic layer are laminated,
    wherein a barrier layer is laminated in the laminated structure constituting the electrochromic element.

2.   The electrochromic element according to claim 1,
    wherein the barrier layer has gas barrier properties and transparency.

3. The electrochromic element according to claim 1 or 2,

   wherein a functional layer is formed on the surface of the electrochromic film, and
   wherein the barrier layer is arranged between the electrochromic film and the functional layer.

4. The electrochromic element according to claim 3,
   wherein the functional layer includes at least one of a hard coat layer, an antireflection layer, an antistatic layer, a water repellent layer, and an antifogging layer.

5. The electrochromic element according to claim 1 or 2,
   wherein the barrier layer is arranged between the support and the electrochromic film.

6. The electrochromic element according to claim 1 or 2,

   wherein the electrochromic film includes a pair of substrates, the electrode layer laminated between the substrates, and the electrochromic layer, and
   wherein the barrier layer is arranged between at least one of the substrates and the electrochromic layer.

7. A lens for spectacles which is the electrochromic element according to claim 1 or 2,
   wherein the support is a lens substrate.

FIG.1

FIG.2

FIG.3

(a)　　　　　　　　　　　　　(b)

(c)　　　　　　　　　　　　　(d)

FIG.4

## INTERNATIONAL SEARCH REPORT

| International application No. |
|---|
| **PCT/JP2022/020520** |

**A. CLASSIFICATION OF SUBJECT MATTER**

*G02F 1/153*(2006.01)i; *G02C 7/00*(2006.01)i; *G02C 7/10*(2006.01)i; *G02F 1/15*(2019.01)i
FI: G02F1/153; G02C7/00; G02C7/10; G02F1/15 503

According to International Patent Classification (IPC) or to both national classification and IPC

**B. FIELDS SEARCHED**

Minimum documentation searched (classification system followed by classification symbols)
G02F1/153; G02C7/00; G02C7/10; G02F1/15

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-10106 A (RICOH CO LTD) 18 January 2018 (2018-01-18) paragraphs [0025]-[0030], [0056], [0074], fig. 1A-1C | 1-5, 7 |
| Y | | 6 |
| Y | WO 2018/181181 A1 (TOPPAN PRINTING CO., LTD.) 04 October 2018 (2018-10-04) paragraphs [0008], [0020], [0035], fig. 1(a), 1(b), 3 | 6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/020520**

| Patent document cited in search report | | | Publication date (day/month/year) | Patent family member(s) | Publication date (day/month/year) |
|---|---|---|---|---|---|
| JP | 2018-10106 | A | 18 January 2018 | US 2018/0017835 A1 paragraphs [0058]-[0074], [0130], [0165]-[0167], fig. 1A-1C | |
| WO | 2018/181181 | A1 | 04 October 2018 | US 2020/0009829 A1 paragraphs [0010], [0028], [0043], fig. 1(a), 1(b), 3 EP 3603960 A1 CN 110431008 A | |

Form PCT/ISA/210 (patent family annex) (January 2015)

**EP 4 343 416 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017111389 A
- JP 2021082860 A